Europäisches Patentamt

European Patent Office

Office européen des brevets

(19)

(11) Publication number: 0 216 099
A2

# (12) EUROPEAN PATENT APPLICATION

(21) Application number: 86111031.0

(22) Date of filing: 09.08.86

(51) Int. Cl.⁴: **C 08 F 299/06**
C 08 G 18/81, C 08 G 18/62

(30) Priority: 29.08.85 US 770433

(43) Date of publication of application:
01.04.87 Bulletin 87/14

(84) Designated Contracting States:
BE DE FR GB IT NL

(71) Applicant: DeSOTO, INC.
1700 South Mt. Prospect Road
Des Plaines Illinois 60018(US)

(72) Inventor: Zimmerman, John M.
4450 Shorewood Drive
Hoffman Estates, Ill. 60195(US)

(72) Inventor: Noren, Gerry K.
1836 Sessions Walk
Hoffman Estates, Ill. 60195(US)

(72) Inventor: Cutler, Orvid R., Jr.
2538 Yarrow Lane
Rolling Meadows, Ill. 60008(US)

(72) Inventor: Bevineau, Yolanda M.
1301 Leawood Court
Naperville, ILL 60565(US)

(74) Representative: Reitzner, Bruno, Dr.
Patentanwälte Dipl.-Ing. R. Splanemann Dr. B. Reitzner
Tal 13
D-8000 München 2(DE)

(54) Radiation-curable gelatinous filling composition.

(57) A free flowing, easily injectable radiation-curable liquid mixture which can be cured by appropriate radiation exposure to form a non-flowing gelatinous solid comprises a linear polymer or copolymer of monoethylenically unsaturated monomers free of isocyanate-reactive functional groups and having a glass transition temperature below −40°C., and carrying a single terminal polymerizable ethylenically unsaturated group. This unsaturated polymer or copolymer is employed in admixture with from 1% to 30% of its own weight of a low glass transition temperature monoethylenically unsaturated monomer.

-1-

# RADIATION-CURABLE GELATINOUS FILLING COMPOSITIONS
## DESCRIPTION

### Technical Field

This invention relates to radiation-curable liquid compositions which cure to a non-flowing gelatinous state, and includes flexible tubes containing optical glass fibers which are filled with such cured gelatinous materials to protect the fibers.

### Background Art

The protection of optical glass fibers by having them loosely confined within a thixotropic liquid-filled flexible tube is itself known. However, the known compositions are not as easily pumpable as is desired (which limits the speed of filling the tubes) and at elevated temperature the liquid drains out of the tube. When the liquid drains away, it leaves the fibers within the tube unprotected and they can abrade by rubbing against one another or against the inside of the tube. One or several fibers can be placed within a single tube to enable the several fibers to be simultaneous handled.

To summarize the difficulty with the existing materials, they are either too viscous and hard to pump into the tube, or they are too thin and flow out of the filled tube when subjected to heat.

In contrast with the existing materials, it is desired to provide a liquid which cures to have about the same physical characteristics as the thixotropic polyisobutylene-based or silicone oil-based compositions now used, but which which are more fluid for easier injection and which do not drain from the tube on elevated temperature exposure.

Thermal cures are known, but they are slow and there is a tendency for thermally cured materials

-2-

to continue curing when subjected to elevated temperatures. It is therefore desirable to be able to employ a radiation cure which quickly forms a fully cured product which retains its character on subsequent elevated temperature exposure.

Many radiation-curable liquid compositions are known in which exposure of the liquid to radiation, and especially to ultraviolet radiation, causes the composition to convert from the liquid to a relatively rigid solid form. While some of these solids are rubbery in character, they are formed from polyethylenically unsaturated materials which possess some considerable strength when cured. In contrast, this invention is concerned with liquids which can be easily pumped into place, for example into small diameter flexible tubes, and which cure rapidly to a non-flowing gelatinous solid.

These gelatinous solids are very soft and flexible at low temperature (they are jelly-like) to protect elements movably embedded therein, such as optical glass fibers positioned within a protecting tube, from impact, abrasion, and thermal stress. However, and even at an elevated temperature of 88°C., the cured gels of this invention do not drain out of the tube.

Disclosure of Invention

In accordance with this invention, a linear polymer or copolymer of monoethylenically unsaturated monomers free of isocyanate-reactive functional groups and having a glass transition temperature below -40°C., preferably below -60°C., and carrying a single terminal polymerizable ethylenically unsaturated group. The preferred polymers or copolymers are formed by solvent solution polymerization and are liquid at room temperature (25°C.). This polymerization is performed in the presence of a monomercaptan carrying a single hydroxy or amine group so that the polymer or copolymer is terminated with a single isocyanate-reactive group per molecule. These polymers are preferably terminated by an acrylate group carried by a urethane bond. These unsaturated polymers are blended with from 1% to 30%, preferably from 3% to 20%, of their own weight of a liquid monoethylenically unsaturated monomer having a glass transition temperature below about 0°C. to provide low viscosity in a rapidly curable mixture. An effective amount of an ultraviolet photoinitiator is preferably added to enable the preferred ultraviolet cure. The result is a free flowing, easily injectable liquid mixture which can be cured by appropriate radiation exposure to form a non-flowing gelatinous solid.

The glass transition temperature of the monomers is the glass transition temperature of a homopolymer made from the monomers, and the glass transition temperature of a polymer or copolymer can be calculated from the monomers and their proportion, or measured physically in well known fashion.

Referring more particularly to the linear polymer or copolymer of monoethylenically unsaturated monomers free of isocyanate-reactive functional groups and having a glass transition temperature below -40°C., preferably below -60°C., this polymer is usually produced by solution copolymerization to form a soluble polymer or copolymer in the presence of a monomercaptan carrying a single hydroxy or amine group. The mercaptan functions as a chain-terminating agent. In this way, the growing polymer or copolymer chain is terminated by the mercaptan, and this provides each polymer molecule with a single isocyanate-reactive group, preferably an hydroxy group. Chain terminating agents of the type under consideration are not new, but they have not previously been used as the basis for providing soluble linear polymers and copolymers which have a single polymerizable unsaturation at the end of each polymer molecule.

The monoethylenically unsaturated monomers may be of diverse type so long as one observes two precautions. First, none of the monomers can include an isocyanate-reactive group. On this basis, hydroxy functionality must be excluded from the monomers which are copolymerized, and any other group which will react with isocyanate functionality must also be excluded. Second, the monomers must be largely constituted by esters or ethers which produce polymers having a low glass transition temperature. Thus, one may use $C_2$-$C_{22}$ esters of acrylic, methacrylic, or similar addition polymerizable monoethylenically unsaturated carboxylic acid, including polycarboxylic acids, such as di(ethylhexyl) maleate. These can be used alone if the glass transition temperature is low enough, and they can be used in mixtures to provide the desired glass transition temperature. Suitable esters are illustrated by butyl acrylate, 2-ethylhexyl acrylate, stearyl acrylate, and the corresponding methacrylates. Ethers are illustrated by 2-ethylhexyl vinyl ether. Other monomers which may be present are illustrated by styrene, vinyl toluene, acrylonitrile, n-butyl vinyl ether, vinyl acetate, and the like, but many of these produce high glass transition temperatures, so their proportion must be minimized.

The preferred copolymerization in organic solvent solution may be carried out in largely conventional fashion using a water miscible organic solvent, moderate heat, and a free radical-generating polymerization catalyst, such as azobisisobutyronitrile, benzoyl peroxide or other catalyst as further illustrated in the examples. The only thing unusual about the polymerization is the use of the monohydric or monoamine chain terminating agent. The preferred relatively low molecular weight polymers are provided automatically by the use of the chain terminator in appropriate amounts and also by the preference for solution polymerization. A number average molecular weight in the range of from 2000 to 10000 is particularly contemplated. Of course, the solvent is largely removed after the desired polymer is formed.

Appropriate mercaptans are illustrated by beta mercapto ethanol, 3-mercapto propanol, and 1-amino, 3-mercapto propanol.

The reaction of the hydroxy or amino polymer or copolymer to provide monoethylenic-terminated polymer chains, and particularly monoacrylate-terminated polymer chains, is most easily carried out by reacting with a monoethylenic monoisocyanate. The reaction forms a urethane with the preferred hydroxy group, and a urea with the amine group. These reactions proceed easily to substantial completion at moderate temperature, especially in the presence of an appropriate catalyst, these catalysts being well known and illustrated by soluble tin salts as illustrated in Example 1. These reactions with the isocyanate group do not induce polymerization of the ethylenic group, especially in the presence of an agent such as phenothiazine which inhibits the premature polymerization of even acrylate unsaturation.

The monoethylenic monoisocyanates are well known, being easily formed by adducting one mole of a monoethylenic monohydric compound, such as 2-hydroxyethyl acrylate, 2-hydroxypropyl acrylate, 2-hydroxybutyl acrylate, or the corresponding methacrylate, with one mole of an organic diisocyanate. The diisocyanates are subject to wide variation, as is well known, and are illustrated by toluene diisocyanate and isophorone diisocyanate.

While it is most convenient to react the hydroxy polymer or copolymer with the monoethylenic monoisocyanate in equivalent proportions to couple the monoethylenic group to the polymer chain by a urethane group, it is possible to use excess diisocyanate to react with the hydroxy polymer and then to react the unreacted isocyanate groups with the monohydric acrylate, methacrylate or the like.

While urethane formation is preferred, one can also use acrylic or methacrylic acid and carry the unsaturated group by ester formation. This reaction requires higher temperature which can cause premature polymerization, and hence is less preferred.

As will be understood, ultraviolet cures are particularly contemplated, and acrylate unsaturation is preferred for that reason. When other radiations are used for cure, such as electron beam radiation, then other ethylenically unsaturated groups can be used, like the methacrylate group, and initiators are generally unneeded. On the other hand, when one selects ultraviolet radiation, then acrylate unsaturation is usually needed for a rapid cure, and photoinitiators are employed in order that the ultraviolet light will induce the addition polymerization needed for cure.

-7-

Acrylate-functional liquid monomers having a low glass transition temperature, e.g., less than 0°C., preferably less than -20°C., provide the low viscosity needed for injection at the same time that they enable a reasonably rapid ultraviolet cure and maintain the desired gelatinous solid cured condition. Low glass transition temperature acrylate monomers which may be used are ethoxyethoxyethyl acrylate, phenoxyethyl acrylate, dimethylaminoethyl acrylate, butoxyethyl acrylate, 2-hydroxyethyl acrylate, and tetrahydro furfuryl acrylate.

While other liquid monomers which form low glass transition temperature homopolymers can be used, such as the methacrylates which correspond to the above acrylates, the acrylates are most rapidly reactive, and this is important to the preferred ultraviolet cure.

The compositions of this invention are preferably cured with ultraviolet light, so photoinitiators are normally present in an amount of from 0.5% to 8%, preferably from 2% to 5%. These are conventional components of ultraviolet curing ethylenically unsaturated coatings, the usual photoinitiators being ketonic, such as benzophenone, acetophenone, diethoxy acetophenone, m-chloro-acetophenone, propiophenone, thioxanthone, benzoin, benzil, anthraquinone, and the like. Benzophenone is quite effective in this invention, but it is presently preferred to use dimethoxyphenyl acetophenone which is available in commerce under the trade designation Irgacure 651 from Ciba-Geigy, Ardsley, NY. These photoinitiators may be used alone or in admixture with one another, and amines, like diethyl amine, can be added as photosensitizer, though this is not normally needed.

-8-

The compositions of this invention are normally free of volatile organic solvents since these would have to be evaporated before ultraviolet exposure, and this would slow the cure.

Throughout this description and also in the claims, proportions are by weight unless otherwise stated. The invention is illustrated as follows.

Example 1

369.4 grams of methyl ethyl ketone were charged to a 3 liter, 4-neck flask in a 60°C. water bath and allowed to reach the temperature of the bath. The contents of the flask were then purged with nitrogen and a nitrogen blanket was used during the polymerization reaction to be described.

12.3 grams (0.0487 mole) of azobis dimethyl valeronitrile polymerization catalyst dissolved in 69.2 grams of methyl ethyl ketone were then charged to the 3 liter flask and allowed to warm to reaction temperature. Then a separately prepared mixture of 616.1 grams (3.303 moles) of 2-ethylhexyl acrylate and 13.1 grams (0.165 mole) of beta-mercaptoethanol were slowly pumped into the 3 liter flask over a period of 2 hours and the contents were stirred overnight at 60°C. to provide a polymer having a number average molecular weight of 3826 (by calculation from the hydroxyl content of the composition and the assumed single hydroxy group per molecule.

A vacuum was then applied to the reaction product at 60°C. to remove most of the solvent, and any remaining solvent was evaporated off by bubbling dry air through the mixture after heating the water bath to 80°C. to maintain this higher temperature.

57.1 grams of a previously prepared adduct of 1 mole of isophorone diisocyanate with 1 mole of 2-hydroxyethyl acrylate together with 0.8 grams of dibutyl tin dilaurate and 0.3 gram of phenothiazine were added to the solvent-free reaction product and the mixture was stirred for 10 hours at 80°C. to cause the isocyanate groups of the adduct to form a urethane with the hydroxy groups of the copolymer. A dry air sparge was used during the urethane reaction. The NCO level barely dropped to zero near the end of the 10 hour reaction period, so it was evident that the added isocyanate functionality was equal to the hydroxy content of the oligomer. If the NCO level does not drop to zero, a small amount of 1-butanol can be added to consume any excess NCO. If the NCO level drops too rapidly, more of the adduct can be added to react with substantially all of the polymer hydroxy groups.

The result is a polymer having a very low glass transition temperature because of the large proportion of polymerized 2-ethylhexyl acrylate contained therein and which carries a single acrylate group on each molecule thereof. This low molecular weight liquid polymer is easily poured, having a viscosity measured at 25°C. using a #2 spindle at 2.5 rpm of 9400 centipoises.

Example 2

The monoacrylate polymer of Example 1 was mixed with a low glass transition temperature monomer (ethoxyethoxyethyl acrylate) in proportions of 86.0 grams of polymer to 10.0 grams of monomer and 4.0 grams of diethoxyacetophenone were added to provide, after mixing for 20 minutes, a mixture having a viscosity of 3000 centipoises at 25°C.

Precoated optical glass fiber was drawn through an ultraviolet clear nylon 12 tube having an internal diameter of 100 mils. At the same time as

-10-

the fiber was drawn through the tube, the tube was filled with the fluid liquid mixture described above by injecting it into the tube in the same direction as the movement of the fiber. The filled tube is then exposed to ultraviolet light, an exposure of from 3 to 10 Joules/cm$^2$ being adequate to form a non-flowing gelatinous mixture which does not flow out of the tube.

When the same fluid liquid mixture described above was coated upon a glass plate in a thickness of 50 mil and cured with 3.5 Joules/cm$^2$, the cured product closely resembled the thixotropic polyisobutylene tube filling liquids now used as shown by the tabulated data presented below.

TABLE

| Complex viscosity (eta *) dynes/cm$^2$ | Example 2 | Commercial Control |
|---|---|---|
| at 21°C. | 1500 | 1500 |
| at -20°C. | 870000 | 1000000 |
| at -46°C. | 10000000 | 10000000 |

The complex viscoity is obtained from Rheometrics Dynamic Tester and shows that the gelatinous solids produced herein have much the same physical character under shear as those of the commercial control. However, while the commercial control flows easily at 88°C. and drains from a filled optical fiber-containing flexible tube of the type used in this example, the product of this example does not drain out of the filled tube at 88°C.

CLAIMS

**0216099**

1. A free flowing, easily injectable radiation-curable liquid mixture which can be cured by appropriate radiation exposure to form a non-flowing gelatinous solid comprising, a linear polymer or copolymer of monoethylenically unsaturated monomers free of isocyanate-reactive functional groups and having a glass transition temperature below -40°C., and carrying a single terminal polymerizable ethylenically unsaturated group, said unsaturated polymer or copolymer being in admixture with from 1% to 30% of its own weight of a monoethylenically unsaturated monomer having a glass transition temperature below about 0°C.

2. A liquid mixture as recited in claim 1 in which said polymer or copolymer has a number average molecular weight in the range of from 2000 to 10000.

3. A liquid mixture as recited in claim 2 in which said polymer or copolymer is formed by solvent solution polymerization in the presence of a monomercaptan carrying a single hydroxy or amine group to provide a single isocyanate-reactive group which is reacted with a monoethylenically unsaturated monoisocyanate.

4. A liquid mixture as recited in claim 2 in which said monoethylenically unsaturated monoisocyanate is an adduct of one mole of an organic diisocyanate with one mole of a monohydric acrylate.

5. A liquid mixture as recited in claim 2 in which said polymer or copolymer is a liquid having a glass transition temperature below -60°C. and said monomers in said polymer or copolymer consist essentially of acrylate esters.

6. A liquid mixture as recited in claim 5

- 2-

in which said monomers in said polymer or copolymer consist essentially of 2-ethylhexyl acrylate.

7. A liquid mixture as recited in claim 1 further including an effective amount of an ultraviolet photoinitiator to enable an ultraviolet cure.

8. A liquid mixture as recited in claim 7 in which said polymer or copolymer is in admixture with from 3% to 20% of its own weight of a monoacrylate having a glass transition temperature below about -20°C.

9. A liquid mixture as recited in claim 8 in which said low glass transition temperature monoethylenically unsaturated monomer is selected from ethoxyethoxyethyl acrylate and phenoxyethyl acrylate.

10. A flexible tube containing optical glass fibers embedded in the liquid mixture recited in claim 1, said liquid mixture having been cured by exposure to radiation to provide a solid non-flowing gelatinous composition.